# EUROPÄISCHE PATENTSCHRIFT

(11) **EP 3 184 990 B1**
(45) Veröffentlichungstag und Bekanntmachung des Hinweises auf die Patenterteilung: **06.11.2019**
(21) Anmeldenummer: 15202161.4
(22) Anmeldetag: 22.12.2015
(51) Int. Cl.: G01N 21/25, G01N 21/27, G01J 3/02, G01J 3/28, G01J 3/50, G01N 21/47, G01N 21/57, G02B 21/36

(54) **SPARKLE-MESSUNG**
SPARKLE MEASUREMENT
MESURE D'ETINCELLES

(43) Veröffentlichungstag der Anmeldung: 28.06.2017
(60) Teilanmeldung: 18208933.4
(73) Patentinhaber: X-Rite Switzerland GmbH, 8105 Regensdorf (CH)
(72) Erfinder: EHBETS, Peter, 8046 Zürich (CH); NIEDERER, Guido, 8046 Zürich (CH)
(74) Vertreter: SSM Sandmair

(56) Entgegenhaltungen:
- EP-A1- 2 551 663
- EP-A1- 2 728 342
- EP-A2- 1 213 569
- WO-A1-2007/018616
- WO-A1-2015/014748
- US-A- 5 963 332
- US-A- 6 034 372
- US-A1- 2002 167 669
- US-A1- 2005 286 053
- US-A1- 2013 050 540
- US-A1- 2015 260 647
- ERIC KIRCHNER ET AL: "Making sense of measurement geometries for multi-angle spectrophotometers", COLOR RESEARCH & APPLICATION, Bd. 37, Nr. 3, 13. Juli 2011 (2011-07-13), Seiten 186-198, XP055217548, ISSN: 0361-2317, DOI: 10.1002/col.20679

## Beschreibung

Die Erfindung betrifft eine Vorrichtung zur radiometrischen Ausmessung der Oberfläche eines Messobjekts mit in einem Trägermaterial eingebetteten Effektpigmenten oder Flakes gemäss dem Oberbegriff des Anspruchs.

Oberflächenbeschichtungen mit eingelagerten plättchenförmigen Effekt-Pigmenten (Flakes) erzeugen bekanntermassen einen Glitzer- oder Funkel-Effekt (Sparkle Effekt) - siehe z.B. die Referenz-Dokumente [Wissling2006] und [Pfaff2009]. Plättchenartige Effekt-Pigmente wirken im sie einbettenden Substrat bzw. Medium wie kleinste Spiegel und reflektieren das einfallende Licht. Glitzerpunkte (Sparkles) werden sichtbar, wenn ein Effekt-Pigmente enthaltendes Beschichtungsmaterial mit gerichtetem Licht, z.B. Sonnenlicht oder Licht von einer Punktlichtquelle, beleuchtet wird. Der entsprechende visuelle Effekt ist ein Muster (Pattern) von hellen Lichtquellen mit hohem Kontrast, welche dem Hintergrundfarbton des Beschichtungsmaterials überlagert sind. Das visuelle Erscheinungsbild (Appearance) des Glitzer-Effekts (Sparkle Effekts) ist im Referenz-Dokument [Kirchner2007] ausführlicher beschrieben.

Die englischen Begriffe "Appearance", "Flake" und "Sparkle" haben sich in der einschlägigen Fachwelt allgemein durchgesetzt und werden deshalb auch im vorliegenden Text anstelle der deutschen Begriffe "Erscheinungsbild", "Plättchen" bzw. "Glitzer- oder Funkelpunkt" verwendet.

Abhängig von Art und Grösse der Effekt-Pigmente haben die von ihnen erzeugten Sparkles unterschiedliche Helligkeiten und Farbverteilungen. Beispielsweise werden die Sparkles von Rein-Aluminium-basierten Flakes als (farblich) neutral empfunden, während andere Spezial-Effekt-Pigmente wie z.B. Xirallic Crystal Silver (Marke der Firma Merck KGaA), ein Sparkle-Muster mit einer breiteren Farbverteilung produzieren.

Sparkies stellen ein ortsabhängiges Appearance Phänomen dar, dessen Charakterisierung (digitale) Bilddaten der Materialoberfläche erfordert. Die vorliegende Erfindung beschäftigt sich allgemein mit der Erfassung bzw. Messung solcher Bilddaten und den dazu erforderlichen Messeinrichtungen. Konkreter beschäftigt sich die Erfindung mit messtechnologischen Voraussetzungen und Methoden für die radiometrische Ausmessung von Sparkles in einem Bild.

Ein grundlegendes Ziel jeder Messvorrichtung der gattungsgemässen Art ist die Erfassung von Messdaten, welche mit der Appearance des Messobjekts, das heisst mit der visuellen Wahrnehmung, übereinstimmen. Eine visuelle Bewertung wird typischerweise unter definierten Beobachtungsbedingungen durchgeführt, welche Lichtart, Beleuchtungsstärke, Probengrösse, Betrachtungs- und Beleuchtungsgeometrie und den Betrachtungsabstand zur Probe beinhalten. Gute Voraussetzungen für eine hohe Korrelation zwischen visueller Appearance und der Visualisierung von messtechnischen Resultaten werden erzielt, wenn die verwendete Messgeometrie und die prinzipielle Messtechnik den Beobachtungsbedingungen möglichst entsprechen.

Gute Beobachtungsbedingungen für genaue Appearance-Bewertung erfordern eine Probenbeleuchtung mit genügender Beleuchtungsstärke, so dass das Auge akkomodiert ist und der Pupillendurchmesser typischerweise kleiner als 4 mm ist. Typische Beobachtungsdistanzen vom Auge zur Probe liegen im Bereich von 250 bis 500 mm. Die Aperturwinkel des Auges und der Lichtquelle sind wichtige Parameter. Sie regeln den Kontrast, die Anzahl, die Dichte und die Farbigkeit der Sparklepunkte, welche visuell wahrgenommen werden können.

EP 2 728 342 A1 offenbart ein Handmessgerät zur Erfassung des visuellen Eindrucks von Materialien, das jedoch nicht den Einfluss der Dispersion des Trägermaterials auf die Messung und vor allem nicht die spezielle Messbedingungen für die Apperturwinkel in Beleuchtungs- und Aufpickanordnung, die zur Bestimmung spektraler Eigenschaften eines Sparkle, unabhängig von der Dispersion des Trägermaterials eingehalten werden müssen, bedenkt.

ERIC KIRCHNER ET AL: "Making sense of measurement geometries for multi-angle spectrophotometers", COLOR RESEARCH & APPLICATION, Bd. 37, Nr. 3 (2011-07-13), XP055217548, ISSN: 0361-2317, DOI: 10.1002/col.20679 befasst sich mit der spektralen Farbmessung von Effektlacken als integraler Messgröße, wobei ein Trägermaterial mit einem konstanten Brechungsindex von n = 1,5 verwendet wird und Dispersionseffekte nicht berücksichtigt werden.

US 2005/286053 A1 offenbart ein Messgerät für integrale Farbmessung und nicht die bildbasierte Messung von einzelnen Sparkles. Es wird eine Korrektur von Winkelfehlern diskutiert, jedoch keine Dispersionseffekte sondern nur ein Strahlengang für einen typischen Brechungsindex des Trägermaterials berücksichtigt.

Vor diesem Hintergrund besteht die Aufgabe der Erfindung in der Bereitstellung einer zur Sparkle-Messung geeigneten und für diesen Anwendungszweck messtechnisch optimierten Vorrichtung zur radiometrischen Ausmessung der Oberfläche eines Messobjekts. Die Messvorrichtung soll dabei insbesondere Messdaten liefern können, deren Visualisierung mit der visuellen Wahrnehmung eines Beobachters übereinstimmt. Ein weiteres Ziel der Erfindung ist die Erfassung von geräte- und technologieunabhängigen, kalibrierten multi-spektralen Messdaten, welche als Grundlage für
die Berechnung von Texturskalen und für Datenaustausch und Kommunikation benutzt werden können.

Diese der Erfindung zugrundeliegende Aufgabe wird durch die durch die Merkmale des Anspruchs gekennzeichnete erfindungsgemässe Messvorrichtung gelöst. Vorteilhafte Ausgestaltungen und Weiterbildungen der erfindungsgemässen Messvorrichtung werden im Folgenden ebenfalls beschrieben.

Das Wesen der Erfindung besteht in Folgendem: Eine Vorrichtung zur radiometrischen Ausmessung der Oberfläche eines Messobjekts mit in einem Trägermaterial eingebetteten Effektpigmenten oder Flakes umfasst mindestens eine eine Beleuchtungsanordnung und eine Aufpickanordnung aufweisende Messanordnung und einen Rechner zur Steuerung der Beleuchtungsanordnung und der Aufpickanordnung sowie zur Verarbeitung von von der Aufpickanordnung erzeugten Messsignalen und zur Bereitstellung von verarbeiteten Bilddaten. Die Beleuchtungsanordnung weist mindestens eine Lichtquelle auf und ist dazu ausgebildet, einen Bereich des Messobjekts unter einem Beleuchtungswinkel und einem Beleuchtungsaperturwinkel mit Beleuchtungslicht zu beaufschlagen. Die Aufpickanordnung weist einen fotoelektrischen Bildsensor auf und ist dazu ausgebildet, vom Messobjekt zurückgestrahltes Messlicht unter einem Aufpickwinkel und einem Aufpickaperturwinkel aufzufangen und auf den Bildsensor zu lenken. Die Beleuchtungsanordnung ist dazu ausgebildet, Beleuchtungslicht in mehreren Spektralbereichen zu erzeugen und/oder die Aufpickanordnung ist dazu ausgebildet, aufgefangenes Messlicht in mehrere Spektralbereiche aufzuspalten, so dass der Bildsensor multi-spektrale Bilddaten erzeugt. Der Beleuchtungsaperturwinkel der Beleuchtungsanordnung und/oder der Aufpickaperturwinkel der Aufpickanordnung ist bzw. sind grösser als die durch die Materialdispersion verursachte Winkelvariation über den spektralen Messbereich des von einem im Trägermaterial eingebetteten Effektpigment bzw. Flake reflektierten Lichts.

Durch diese Bemessung des Beleuchtungsaperturwinkels und des Aufpickaperturwinkels wird die Messvorrichtung hinsichtlich ihrer Eignung zur Ausmessung von Sparkles insofern verbessert, als dadurch messtechnisch eine genaue Messung der Farbe oder allgemeiner der multi-spektralen Eigenschaften der Sparkles sowie eine Optimierung der erfassten Sparkle-Dichte erreicht werden.

Vorteilhafterweise unterscheiden sich der Beleuchtungsaperturwinkel der Beleuchtungsanordnung und der Aufpickaperturwinkel der Aufpickanordnung um einen Faktor 2-10, wobei der grössere der beiden Aperturwinkel mindestens +/-2.5° beträgt. Bevorzugterweise beträgt der Faktor, um den sich der Beleuchtungsaperturwinkel der Beleuchtungsanordnung und der Aufpickaperturwinkel der Aufpickanordnung unterscheiden, 4-7, insbesondere ungefähr 5. Ganz besonders bevorzugt beträgt der Aufpickaperturwinkel mindestens +/- 0.5° und höchstens +/- 1.0° und der Beleuchtungsaperturwinkel mindestens +/- 2.5°. Diese Bemessung des Aufpickaperturwinkels und des Beleuchtungsaperturwinkels Verhältnisse ermöglichen messtechnisch eine gute Farb- oder Multi-spektral-Messgenauigkeit für die Sparklepunkte zu erzielen. Ausserdem wird eine genügend hohe Anzahl von Sparklepunkten erzeugt, was wichtig für eine gute Reproduzierbarkeit der Messung ist.

Gemäss einer besonders vorteilhaften Ausbildungsform umfasst die erfindungsgemässe Messvorrichtung eine zweite Messanordnungen mit zugehöriger Beleuchtungsanordnung und Aufpickanordnung, wobei in der zweiten Messanordnung der Beleuchtungsaperturwinkel der Beleuchtungsanordnung und der Aufpickaperturwinkel der Aufpickanordnung im Wesentlichen gleich gross sind und mindestens +/-0.5° betragen.

Durch im Wesentlichen gleich grosse Beleuchtungs- und Aufpickaperturwinkel mit einem Wert grösser/gleich 0.5° wird die Messvorrichtung hinsichtlich ihrer Eignung zur Ausmessung von Sparkles insofern verbessert, als dadurch messtechnisch ein maximaler Kontrast zwischen Sparkles und dem Hintergrund des Messobjekts erreicht wird.

Durch die beiden bezüglich der Beleuchtungs- und Aufpickaperturwinkel unterschiedlich ausgelegten Messanordnungen ist die Messvorrichtung sowohl hinsichtlich Kontrastmaximierung als auch hinsichtlich Genauigkeit der Messung der Farbe oder allgemeiner der multi-spektralen Eigenschaften der Sparkles sowie der erfassten Sparkle-Dichte verbessert und damit besonders gut für die radiometrische Ausmessung von Sparkles geeignet.

Vorzugsweise liegen die im Wesentlichen gleichen Beleuchtungs- und Aufpickaperturwinkel im Bereich von 0.5° - 3.0°.

Zweckmässigerweise unterscheiden sich die im Wesentlichen gleichen Beleuchtungs- und Aufpickaperturwinkel um nicht mehr als 30%, vorzugsweise nicht mehr als 20%, ganz besonders bevorzugt um nicht mehr als 10%.

Vorteilhafterweise beträgt der Aufpickaperturwinkel dabei mindestens +/- 0.5° und höchstens +/- 1.0°.

Gemäss einer besonders vorteilhaften Ausführung der Erfindung weist die Messvorrichtung eine Messanordnung mit zwei Beleuchtungsanordnungen und einer gemeinsamen Aufpickanordnung auf, wobei der Beleuchtungsaperturwinkel der einen Beleuchtungsanordnung im Wesentlichen gleich gross ist wie der Aufpickaperturwinkel der Aufpickanordnung und mindestens +/- 0.5° beträgt und wobei der Beleuchtungsaperturwinkel der anderen Beleuchtungsanordnung um einen Faktor 2-10 grösser ist als der Aufpickaperturwinkel der Aufpickanordnung und mindestens +/- 2.5° beträgt.

Durch diese Ausbildung wird die Eignung der Messvorrichtung für Sparkle-Messungen auf besonders einfache Weise mit einer einzigen Messanordnung sowohl hinsichtlich Genauigkeit der Farbmessung der Sparkles als auch hinsichtlich Kontrast-Maximierung verbessert.

Gemäss einer weiteren vorteilhaften Ausführung der Erfindung weist die Beleuchtungsanordnung und/oder die Aufpickanordnung Mittel zur Verstellung des Beleuchtungsaperturwinkels bzw. des Aufpickaperturwinkels auf. Diese Konfiguration ermöglicht die Verwendung der gleichen Anordnungen, um in einem sequentiellen Messablauf Messungen mit verschiedenen Aperturwinkeln (z.B. hinsichtlich optimierter Farbmessgenauigkeit und hinsichtlich optimierten Kontrasts) durchführen zu können.

Gemäss einer besonders vorteilhaften weiteren Ausführung der Erfindung ist der Rechner dazu ausgebildet, die gemessenen multi-spektralen Bilddaten zu korrigieren, sodass jeder Wellenlängenbereich über das ganze Messfeld eine einheitliche Punktverbreiterungsfunktion besitzt und jedes Bildpixel von einem Sparklebild die radiometrisch korrekte multi-spektrale Information enthält. Dadurch liefert die Darstellung der multi-spektralen Bilddaten auf einem digitalen Display (z.B. Monitor) eine digitale Repräsentation der Sparkles, welche dem entspricht, wie ein menschlicher Beobachter die spektralen Eigenschaften der Sparkles wahrnehmen würde.

Um eine optimale Kompatibilität der visualisierten Bilddaten bzw. der daraus abgeleiteten Werte mit der visuellen Wahrnehmung eines Betrachters zu erreichen, ist die räumliche Auflösung der multi-spektralen Bilddaten gleich oder besser als die Auflösungsgrenze des menschlichen Auges.

Zweckmässigerweise ist der Rechner dazu ausgebildet, die Bildpixel, welche zu einem Bild von einem Sparkle gehören, zu bestimmen, und aus den multi-spektralen Messwerten dieser Bildpixel die Farb- und Helligkeitseigenschaften des Sparkles zu bestimmen.

Vorteilhafterweise ist die Vorrichtung dazu ausgebildet, verschiedene multi-spektrale Bilddaten für gute Sparkle-Farbmessgenauigkeit einerseits und für hohen Sparkle-Kontrast anderseits zu erzeugen.

Im Folgenden wird die Erfindung anhand der Zeichnung näher erläutert. Es zeigen:
- Fig. 1: eine schematische Darstellung des grundsätzlichen Aufbaus eines Ausführungsbeispiels der erfindungsgemässen Messvorrichtung,
- Fig. 2: eine Skizze zur Erläuterung der Lichtbrechung und Reflexion in einem Substrat mit eingebetteten Flakes,
- Fig. 3: die Dispersion des Brechnungsindex n für ein transparentes Kunststoffmaterial,
- Fig. 4: eine Tabelle mit verschiedenen Beleuchtungs- und AufpickwinkelKonstellationen,
- Fig. 5: den Verlauf reflektierter Winkel in Luft für verschiedene Beleuchtungsund Aufpickwinkel-Konstellationen,
- Fig. 6-8: eine stark vereinfachte schematische Darstellung des grundsätzlichen Aufbaus dreier weiterer Ausführungsbeispiele der erfindungsgemässen Messvorrichtung,
- Fig. 9: ein Diagramm typischer Punktverbreiterungsfunktionen (PSF) für verschiedene Wellenlängen,
- Fig. 10: eine schematische Darstellung einer Anordnung zur Messung von Punktverbreiterungsfunktionen,
- Fig. 11: ein Blockschema der Bestimmung optimierter Punktverbreiterungsfunktionen und
- Fig. 12: ein Diagramm korrigierter Punktverbreiterungsfunktionen und
- Fig. 13: ein Blockschema der Verarbeitung von gemessenen Bilddaten.

Für die nachfolgende Figurenbeschreibung gilt folgende Festlegung: Sind in einer Figur einzelne Bezugszeichen nicht eingetragen, so wird diesbezüglich auf die übrigen Figuren und die dazu gehörigen Beschreibungsteile verwiesen. Umgekehrt wird bezüglich nicht explizit beschriebener Elemente einer Figur auf die entsprechenden Beschreibungsteile im Zusammenhang mit anderen Figuren verwiesen.

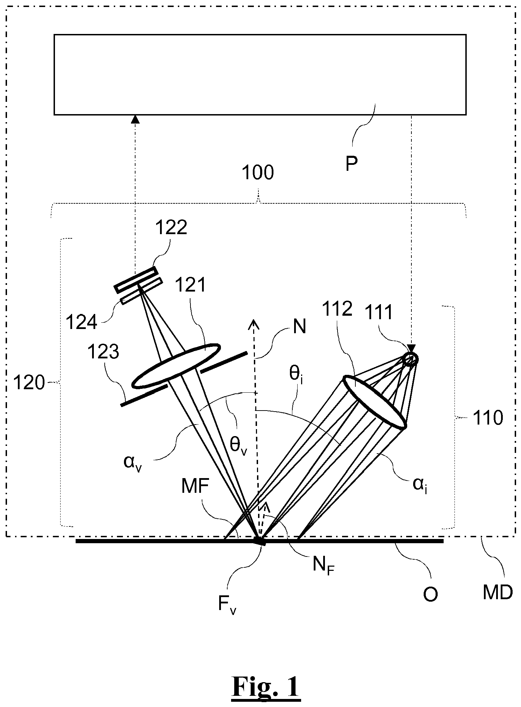

Gemäss der Darstellung der Fig. 1 umfasst die als Ganze mit MD bezeichnete erfindungsgemässe Messvorrichtung eine Messanordnung 100 mit einer Beleuchtungsanordnung 110 und einer Aufpickanordnung 120 sowie einen Rechner P.

Die Beleuchtungsanordnung 110 umfasst mindestens eine Lichtquelle 111 und eine Beleuchtungsoptik 112 und ist dazu ausgebildet, einen Bereich bzw. Messfleck MF auf der Oberfläche eines Messobjekts O mit Beleuchtungslicht zu beaufschlagen, und zwar unter einem Beleuchtungswinkel θᵢ bezogen auf eine Gerätenormale N, welche (bei korrekter Positionierung der Messvorrichtung) mit der Normalen auf die Oberfläche des Messobjekts O zusammenfällt. Die Beleuchtungsanordnung 110 bzw. deren Beleuchtungsoptik 112 weist eine Apertur auf, wobei der Beleuchtungsaperturwinkel der Beleuchtungsanordnung 110 mit αᵢ bezeichnet ist. Der Aperturwinkel αᵢ ist, wie allgemein üblich, als die Hälfte der winkelmässigen Ausdehnung der Beleuchtungslichtverteilung in Luft zu verstehen.

Die Aufpickanordnung 120 umfasst eine Aufpickoptik (Objektiv) 121, einen fotoelektrischen Bildsensor 122 mit zweidimensionaler Pixel-Struktur, eine Aperturblende 123 und einen Satz von Farbfiltern 124. Die Aufpickanordnung 120 ist dazu ausgebildet, vom ausgeleuchteten Oberflächenbereich (Messfleck) des Messobjekts O zurückgestrahltes Messlicht unter einem Aufpickwinkel θᵥ relativ zur Gerätenormalen N zu empfangen und mittels der Aufpickoptik 121 auf den Bildsensor 122 zu lenken. Die Aufpickanordnung 120 bzw. deren Aufpickoptik 121 weist eine Apertur auf, wobei der Aufpickaperturwinkel der Aufpickanordnung 120 mit αᵥ bezeichnet ist. Der Aperturwinkel αᵥ ist als die Hälfte der winkelmässigen Ausdehnung des aufgefangenen Messlichts zu verstehen.

Die Aufpickoptik 121 ist vorteilhafterweise beugungsbegrenzt bzw. nahezu beugungsbegrenzt über den gesamten interessierenden Wellenlängenbereich und hat auch eine gute Farbkorrektur über das gesamte Bildfeld. Objektive bzw. Optiksysteme, die diesen Anforderungen genügen, sind an sich bekannt. Eine sehr gute Abbildungsqualität ist erforderlich, damit die erfindungsgemässe Messvorrichtung in der Lage ist, spektrale Eigenschaften von Punktlichtquellen bzw. Sparkles am Auflösungslimit des optischen Abbildungssystems zu analysieren.

Die Farbfilter 124 sind für mehrere unterschiedliche Spektral- bzw. Wellenlängenbereiche ausgelegt und können selektiv in den Aufpickstrahlengang eingebracht werden, beispielsweise etwa mittels eines rotierenden Filterrads. Der Bildsensor 122 erzeugt Bilddaten, welche den aufgenommenen bzw. ausgemessenen Oberflächenbereich des Messobjekts O in digitaler Form repräsentieren, und zwar für jeden der durch die Farbfilter 124 festgelegten Spektralbereiche (Farbkanäle). Die vom Bildsensor 122 erzeugten Bilddaten stellen damit gewissermassen Farbauszüge des aufgenommenen Oberflächenbereichs des Messobjekts O dar.

Die Anzahl der Farbfilter 124 und damit die Anzahl der Farbauszüge bzw. Farbkanäle kann von 3 bis 40 oder mehr gehen. Drei Farbfilter für die Spektralbereiche rot, grün und blau entsprechen der klassischen Farbmessung, bei 20 oder mehr Farbkanälen liegt für jeden Bildpunkt praktisch ein Satz von spektralen Messdaten vor. Die Ausmessung in drei oder vorzugsweise mehr Wellenlängenbereichen (Farbkanälen) wird hier und im Folgenden als multi-spektral bezeichnet.

Der Bildsensor 122 wird vom Rechner P gesteuert und liefert diesem die (multi-spektralen) Bilddaten zur Verarbeitung. Der Rechner P steuert auch die Lichtquelle(n) 111 der Beleuchtungsanordnung 110.

Anstelle separater Farbfilter 124 können entsprechende Farbfilter auch bereits im Bildsensor 122 integriert ausgebildet sein, d.h. der Bildsensor 122 kann mittels strukturierter Filter vor jedem Pixel als digitale RGB-Farbkamera oder als digitale multi-spektrale Kamera mit mehr als 3 Filterkanälen ausgebildet sein. Dabei kann die Farbkamera auch mehrere Bildsensoren mit unterschiedlichen spektralen Charakteristiken enthalten. Die lichtempfindlichen Elemente (Fotorezeptoren) der Farbkamera mit unterschiedlichen spektralen Eigenschaften können auch vertikal integriert sein. Es können auch Monochromatoren und Spektrometer eingesetzt werden. Mit einem Monochromator in der Beleuchtungsanordnung kann ein spektraler Anteil des Beleuchtungslicht selektiv gewählt werden. Der Monochromator in der Beleuchtungsanodung ermöglicht somit eine sequentielle Messung mit unterschiedlichen Beleuchtungsspektren. Ein Spektrometer in der Aufpickanordung ermöglicht die spektrale Zerlegung der gesammelten Strahlung in eine durch die spektrale Auflösung des Spektrometers definierte Anzahl von unabhängigen spektralen Kanälen. Verschiedene Konzepte von Spektrometern für bildgebende Messsysteme sind bekannt, welche ein sequentielles Messverfahren oder ein simultanes Messverfahren ermöglichen.

Die Farbfilter 124 oder die im Bildsensor 122 integrierten Farbfilter stellen somit Mittel dar, um aufgefangenes Messlicht in mehrere Spektralbereiche aufzuspalten. Alternativ ist es auch möglich, die Beleuchtungsanordnung 110 so auszubilden, dass sie Beleuchtungslicht in mehreren Spektralbereichen erzeugen kann. Dies kann z.B. ebenfalls mittels selektiv in den Beleuchtungsstrahlengang einbringbarer Farbfilter oder mittels mehrerer, in unterschiedlichen Spektralbereichen emittierender Lichtquellen erfolgen. Die Anzahl der Farbkanäle kann dabei ebenfalls von 3 bis ca. 40 oder mehr betragen.

Anstelle auswechselbarer bzw. selektiv in den Beleuchtungs- oder den Aufpickstrahlengang einbringbarer Farbfilter können diese auch elektrisch schaltbar bzw. abstimmbar ausgebildet sein.

Soweit entspricht die dargestellte Messvorrichtung in ihrer grundsätzlichen Konzeption den bekannten Appearance-Messgeräten dieser Art, wie sie z.B. im Dokument EP 2728342 B1 bzw. US 2014/0152990 A1 ausführlich beschrieben sind. Die praktische körperliche Realisierung dieser bekannten Appearance-Messgeräte ist ebenfalls in diesen Dokumenten ausführlich dargestellt. Der Fachmann bedarf daher für die grundsätzliche Konzeption und die praktische körperliche Realisierung der Messvorrichtung soweit keiner näheren Erläuterungen.

In Fig. 1 ist rein beispielsweise ein (virtuelles) Flake Fᵥ dargestellt, welches unter dem Beleuchtungswinkel θᵢ einfallendes Beleuchtungslicht spiegelt. Eine Normale auf das (virtuelle) Flake Fᵥ ist mit N_{F} bezeichnet. Das Flake Fᵥ ist als virtuell bezeichnet, weil die eingezeichneten Strahlengänge die Lichtbrechung im Material, in welchem das Flake eingebettet ist, nicht berücksichtigen bzw. darstellen.

Die an verschiedenen Effekt-Pigmenten beobachteten Sparkles können jeweils charakteristische Farbverteilungen aufweisen. Es ist daher von Interesse, die Farbe oder allgemeiner die multi-spektralen Eigenschaften der Pixel, welche Sparkles, einem Sparkle Punkt oder Spot im Bild zugeordnet sind, möglichst genau zu messen. Diese Information kann z.B. für die Identifikation eines Effekt-Pigments in einem Trägermaterial oder für eine verbesserte Unterscheidung von eingebettete Effekt-Pigmente aufweisenden Beschichtungen mit ähnlichen Farb- oder Appearance-Eigenschaften genutzt werden.

Die möglichst genaue Messung der Farbe oder allgemeiner der multi-spektralen Eigenschaften (Messwerte in mehreren Farbkanälen bzw. Spektralbereichen) des Bilds einer Punktlichtquelle, wie es ein Sparkle darstellt, über einen grösseren Wellenlängenbereich erfordert, dass das optische Messsystem spezielle Bedingungen erfüllt. Konkreter müssen die Beleuchtungsanordnung 110 und die Aufpickanordnung 120 bzw. die Beleuchtungsoptik 112 und die Aufpickoptik 121 so ausgebildet sein, dass der Beleuchtungsaperturwinkel αᵢ einerseits und der Aufpickaperturwinkel αᵥ anderseits gewisse Bedingungen erfüllt.

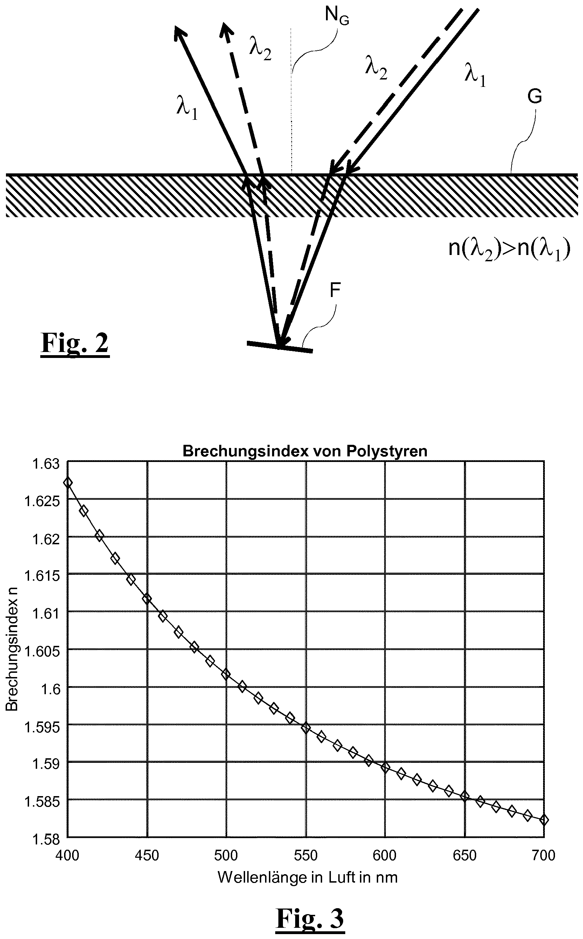

In einer realen Beschichtung liegen die Flakes bzw. Effekt-Pigmente nicht in der Luft, sondern sind in ein Trägermaterial bzw. Medium eingebettet. Die Fig. 2 verdeutlicht dies.

In Fig. 2 sind zwei Strahlengänge der Beleuchtung für unterschiedliche Wellenlängen λ₁ und λ₂ dargestellt, wobei λ₂ kleiner als λ₁ ist. Die geometrischen Lichtstrahlen werden an der Grenzfläche G zwischen Luft und Medium gemäss dem Gesetz von Snell gebrochen. Für typische Beschichtungsmaterialien hat der Brechnungsindex von kleineren Wellenlängen einen grösseren Wert als von grösseren Wellenlängen. Kleinere Wellenlängen werden deshalb stärker gebrochen, d.h. die Winkelablenkung zwischen den beiden Grenzmedien ist grösser. Die in Figur 2 gezeichneten Strahlengänge sind entsprechend dargestellt. Ausserdem sind die beiden Strahlengänge von den unterschiedlichen Wellenlängen so dargestellt, dass sie am gleichen Flake F im Medium reflektiert werden. Es ist ersichtlich, dass die beiden Strahlengänge unterschiedliche Reflektionswinkel beim Flake F aufweisen. Die reflektierten Strahlengänge breiten sich zur Grenzfläche G aus und werden dort nochmals gebrochen. Es ist ersichtlich, dass der Strahlengang der kleineren Wellenlänge λ₂ näher bei der Normalen N_{G} zur Grenzfläche G liegt als der Strahlengang der grösseren Wellenlänge λ₁. Die Figur 2 zeigt auch einen lateralen Versatz zwischen den beiden Strahlen. Eine Simulation mit typischen Werten zeigt, dass der laterale Versatz vernachlässigt werden kann. Die unterschiedlichen Winkel hingegen sind von grosser Bedeutung für die Messung von Sparkles. Die vom Flake reflektierten Strahlen werden von der Aufpickoptik erfasst und erzeugen ein optisches Bild auf dem Kamerasensor. Die Aperturwinkel αᵥ₁ der Aufpickanordnung 120 wird durch die Aperturblende 123 festgelegt und bestimmt den Winkelbereich der gesammelten Strahlengänge. Wegen der Materialdispersion haben die Strahlengänge von verschiedenen Wellenlängen unterschiedliche Winkel. Der Winkelversatz kann zu einer falschen Bewertung der spektralen Reflektionseigenschaften des Flakes führen, wenn die Messoptik des Messsystems diese Material-gegebene Winkelvariation nicht ausgleichen kann.

Die Winkelvariation über den für die Messung relevanten Spektralbereich ist abhängig von der Messgeometrie und kann berechnet werden, wenn die Dispersion des Beschichtungsmaterials (Mediums) bekannt ist oder gemessen wurde. Die Figur 3 zeigt als Beispiel die Dispersion des Brechnungsindex n für ein transparentes Kunststoffmaterial Polystyren, welches auch als Grundmaterial für Farbmischungen von Kunststoffen mit Effektpigmenten verwendet wird.

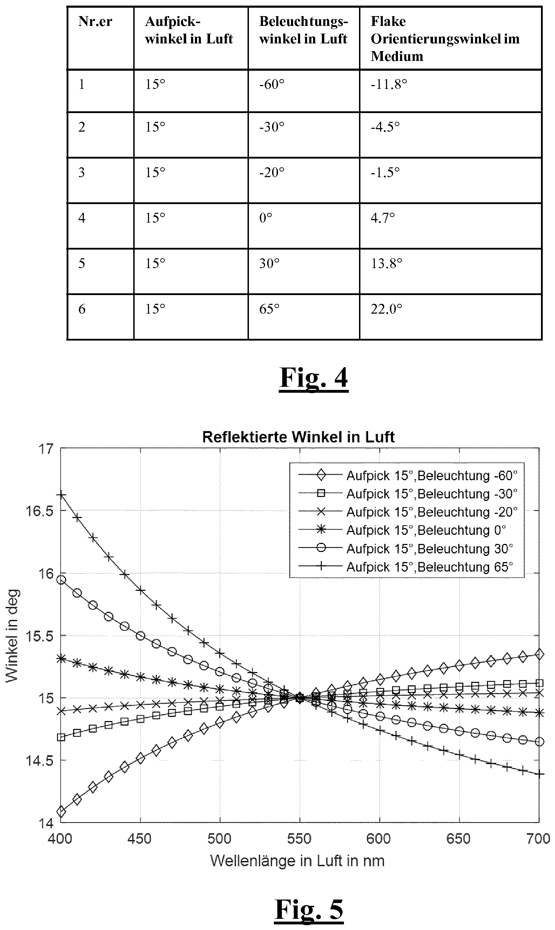

Die Fig. 4 zeigt eine Tabelle von verschiedenen Messgeometrien für Beleuchtungs- und Aufpickanordnungen. Diese Winkel wurden aus der Norm ASTM E2539 genommen. Die ersten zwei Kolonnen beinhalten den Aufpickwinkel der Aufpickanordnung in Luft und den Beleuchtungswinkel der Beleuchtungsanordnung in Luft. Aus diesem Winkel kann der Orientierungswinkel für ein Flake im Medium (Polystyren mit Brechungsindex gemäss Fig. 3) berechnet werden, so dass das Flake für eine mittlere Wellenlänge von 550 nm das Beleuchtungslicht als kleiner Spiegel in den Aufpickwinkel reflektiert. Der Flakeorientierungswinkel im Medium ist gegenüber der Normalen N_{G} zur Grenzfläche G (Fig. 2) definiert.

Für diesen Flakeorientierungswinkel kann dann für jede Wellenlänge mit dem entsprechenden Brechungsindex des Materials für einen Beleuchtungswinkel gemäss der Tabelle in Fig. 4 der entsprechende reflektierte Winkel in Luft berechnet werden. Die reflektierten Winkel sind für alle Wellenlängen zwischen 400 und 700 nm für die 6 Messgeometrien in der Fig. 5 dargestellt. Als Resultat sieht man, dass die Wellenlängen-abhängige Winkelvariation von der Messgeometrie abhängt. Die grösste Winkelvariation wird durch die Messgeometrie Nummer 6 in der Figur 4 erzeugt und beträgt zirka 2° zwischen 400 und 700 nm.

Gemäss einem Hauptaspekt der Erfindung kann die durch die Materialdispersion bedingte Winkelvariation kompensiert werden, wenn der Aperturwinkel der Beleuchtungs- und/oder der Aufpickanordnung grösser als die von der Materialdispersion verursachte Winkelvariation der vom Flake reflektierten Strahlung über den spektralen Messbereich bemessen ist. Diese Winkelvariation kann für die entsprechenden Materialdispersionen und die verwendeten Messgeometrien vorberechnet werden. Bevorzugt wird für Appearance Messgeräte in der Aufpickanordnung ein kleinerer Aperturwinkel gemäss den Verhältnissen des menschlichen Auges verwendet und der grössere Aperturwinkel in der Beleuchtungsanordnung realisiert.

Die genaue Messung von Farb- bzw. multi-spektralen Eigenschaften erfordert, dass die relativen spektralen Eigenschaften des Messsignals über einen gewissen interessierenden Bereich der Flake-Orientierungswinkel konstant bleiben. Der Aperturwinkel muss deshalb grösser als die durch die Dispersion erzeugte Winkelvariation ausgelegt sein, damit diese Winkelbedingung nicht nur für ein Flake im optimalen Orientierungswinkel zutrifft, sondern für eine Verteilung von Flakes mit unterschiedlichem Orientierungswinkel. Dies ermöglicht eine robustere Auswertung der Farbverteilung über die Gesamtheit der gemessenen Sparkles im Bild. Als Grössenordnung für die zusätzliche Winkelaufweitung des Aperturwinkels kann der Aperturwinkel der kleineren Aufpickanordnung verwendet werden. Als Beispiel: Aufpickaperturwinkel αᵥder Aufpickanordnung +/- 0.5° und eine dispersionsverursachte Winkelaufweitung über den sichtbaren Spektralbereich von 2° ergeben einen Beleuchtungsaperturwinkel αᵢ für die Beleuchtungsanordnung von grösser als +/- 2.5°.

Allgemein wird in der Praxis eine möglichst genaue Messung der Farbe oder allgemeiner der multi-spektralen Eigenschaften der Sparkles durch folgende Auslegung bzw. Bemessung des Beleuchtungsaperturwinkel αᵢ der Beleuchtungsanordnung 110 und der Aufpickaperturwinkel αᵥ der Aufpickanordnung 120 erreicht: Der Beleuchtungsaperturwinkel αᵢ unterscheidet sich um einen Faktor 2-10, vorzugsweise um einen Faktor 4-7, insbesondere um einen Faktor ungefähr 5 vom Aufpickaperturwinkel αᵥ, wobei der grössere der beiden Aperturwinkel αᵢ und αᵥ mindestens +/-2.5° beträgt. Im Hinblick auf Signaleffizienz ist zweckmässigerweise der Beleuchtungsaperturwinkel αᵢ grösser als der Aufpickaperturwinkel αᵥ.

Wenn die vorstehend beschriebene Messvorrichtung zur radiometrischen Ausmessung von Materialoberflächen mit eingebetteten Effekt-Pigmenten eingesetzt wird, beinhalten die gemessenen (multi-spektralen) Bilddaten neben dem Hintergrundfarbton der Materialoberfläche auch die von den eingebetteten Effekt-Pigmenten bzw. Flakes erzeugten Sparkles.

Für die Charakterisierung von Sparkles ist es vorteilhaft, dass im gemessenen Bild ein möglichst hoher Kontrast zwischen den Sparkles und dem Hintergrundfarbton des Materials vorliegt. Ein möglichst hoher Sparkle-Kontrast verbessert bei der Verarbeitung der Bilddaten im Rechner P das Diskriminationspotential der Sparkle-SignalVerteilung gegenüber dem Hintergrundsignal in den Bilddaten.

Zur messtechnischen Erzielung eines hohen Sparkle-Kontrasts müssen die Beleuchtungsanordnung 110 und die Aufpickanordnung 120 der Messanordnung 100 gewisse Bedingungen erfüllen. Konkreter müssen die Beleuchtungsanordnung 110 und die Aufpickanordnung 120 bzw. die Beleuchtungsoptik 112 und die Aufpickoptik 121 so ausgebildet sein, dass der Beleuchtungsaperturwinkel αᵢ einerseits und der Aufpickaperturwinkel αᵥ anderseits gewisse Bedingungen erfüllt.

Gemäss einem weiteren wichtigen Aspekt der Erfindung wird ein maximaler Kontrast dadurch erreicht, dass der Beleuchtungsaperturwinkel αᵢ der Beleuchtungsanordnung 110 und der Aufpickaperturwinkel αᵥ der Aufpickanordnung 120 im Wesentlichen gleich gross sind und mindestens +/-0.5° betragen. Unter im Wesentlichen gleich ist dabei zu verstehen, dass sich die beiden Aperturwinkel αᵢ und αᵥ um nicht mehr als 30%, vorzugsweise nicht mehr als 20% unterscheiden. Die beiden Aperturwinkel αᵢ und αᵥ können dabei jeweils im Bereich von 0.5° bis 3.0° liegen. Der Vorteil einer Aperturvergrösserung liegt darin, dass der erzeugbare Lichtdurchfluss erhöht werden kann, womit sich die Messzeit verringern oder die Signalstärke vergrössern lässt.

Die Auslegung der Beleuchtungsanordnung 110 und der Aufpickanordnung 120 so, dass die vorstehenden Bedingungen für die beiden Aperturwinkel αᵢ und αᵥ erfüllt sind, führt nicht nur zu einem optimalen Kontrast, sondern reduziert auch die Abhängigkeit der Messresultate von gerätespezifischen Parametern und erleichtert die weitere Auswertung der Bilddaten. In diesem Winkelbereich und unter den Bedingungen können konsistente, vergleichbare Messresultate für den optimalen Sparklekontrast erzielt werden.

Aus den vorstehenden Ausführungen geht hervor, dass die Bemessung der Aperturwinkel hinsichtlich Kontrast-Maximierung anders sein kann als diejenige hinsichtlich der Optimierung der Messgenauigkeit der Farb- bzw. multi-spektralen Eigenschaften der Sparkles. Beide Bedingungen sind in gewissem Mass widersprüchlich und lassen sich offensichtlich mit ein und derselben Messanordnung der oben beschriebenen Art nicht erfüllen. Wenn die Messvorrichtung sowohl hinsichtlich Sparkle-Kontrast als auch hinsichtlich Farbmessgenauigkeit optimiert sein soll, muss sie dazu z.B. mit zwei entsprechend optimierten Messanordnungen ausgestattet sein.

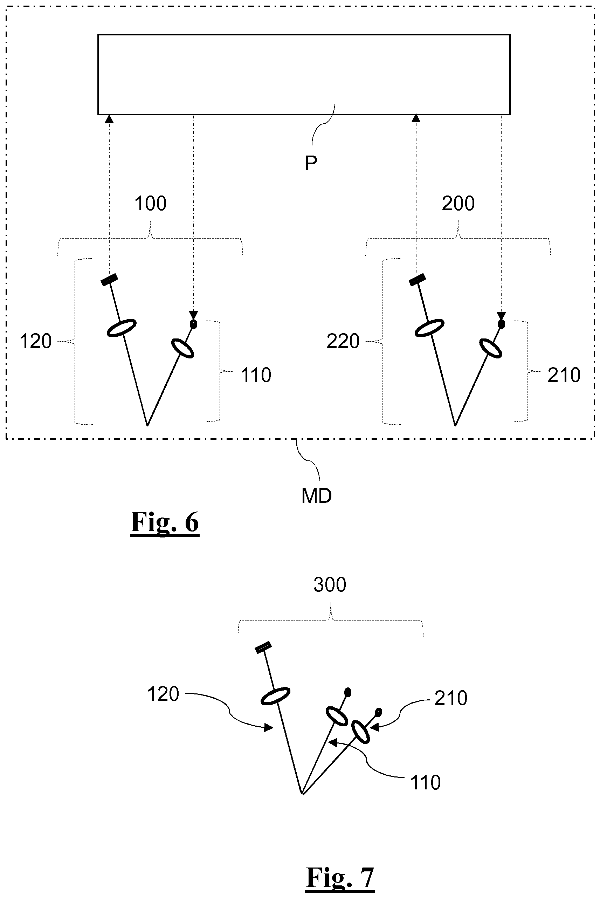

In Fig. 6 ist eine solche Messvorrichtung dargestellt. Die Messvorrichtung MD umfasst hier eine erste Messanordnung 100 mit einer Beleuchtungsanordnung 110 und einer Aufpickanordnung 120 und eine zweite Messanordnung 200 mit einer Beleuchtungsanordnung 210 und einer Aufpickanordnung 220 sowie einen Rechner P zur Steuerung der beiden Messanordnungen 100 und 200 und zur Verarbeitung der von diesen erzeugten (multi-spektralen) Bilddaten. Die Messanordnungen 100 und 200 sind prinzipiell gleich aufgebaut wie die Messanordnung 100 der Fig. 1, wobei aber die Messanordnung 100 hinsichtlich Messgenauigkeit der Farb- bzw. multi-spektralen Eigenschaften der Sparkles und die Messanordnung 200 hinsichtlich Sparkle-Kontrast gemäss den vorstehenden Erläuterungen optimiert ist. In der Fig. 6 sind die beiden Messanordnungen 100 und 200 der Übersichtlichkeit halber nebeneinander dargestellt. In Realität sind sie jedoch in der Messvorrichtung MD vorzugsweise so angeordnet, dass ihre Beleuchtungsanordnungen 110 bzw. 210 ein und dieselbe Stelle (Messfleck) des Messobjekts beleuchten und ihre Aufpickanordnungen 120 und 220 entsprechend Messlicht vom selben Messfleck erfassen.

Die genannten Bedingungen für die Aperturwinkel auf den Beleuchtungsseiten und den Aufpickseiten lassen sich auch mit einer in Fig. 7 schematisch dargestellten Messanordnung 300 erfüllen, die zwei unterschiedlich ausgelegte Beleuchtungsanordnungen 110 und 210 mit Beleuchtungsaperturwinkeln von beispielsweise 0.5° und 2.5° und nur eine einzige gemeinsame Aufpickanordnung 120 mit einem Aufpickaperturwinkel von beispielsweise 0.5° umfasst.

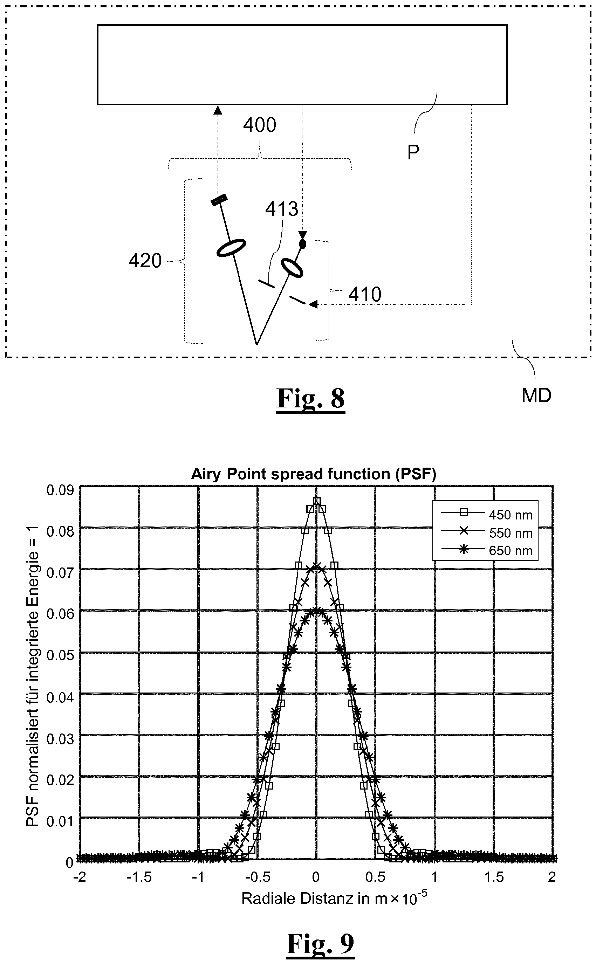

In einer weiteren Variante der erfindungsgemässen Messvorrichtung ist der Beleuchtungsaperturwinkel der Beleuchtungsanordnung und/oder der Aufpickaperturwinkel der Aufpickanordnung variierbar ausgestaltet. In Fig. 8 ist schematisch eine solche Messvorrichtung mit einer Messanordnung 400 dargestellt, welche eine Beleuchtungsanordnung 410 und eine Aufpickanordnung 420 umfasst. Die Beleuchtungsanordnung 410 und die Aufpickanordnung 420 sind im Wesentlichen gleich aufgebaut wie die entsprechenden Anordnungen 110 und 120 im Ausführungsbeispiel der Fig. 1. Zusätzlich ist im Strahlengang der Beleuchtungsanordnung 410 eine mechanische Irisblende 413 mit variablem Durchmesser angeordnet, welche vom Rechner P verstellbar ist. Eine solche variable Blende kann alternativ oder zusätzlich auch als Aperturstopblende im Strahlengang der Aufpickanordnung 420 angeordnet sein. Diese Konfiguration ermöglicht die Verwendung der gleichen Anordnungen, um mit einem sequentiellen Messablauf Messungen mit verschiedenen Aperturwinkeln durchführen zu können, beispielsweise um von Farb-optimierter auf Kontrast-optimierte Messung umzuschalten und umgekehrt.

Die erfindungsgemässe Messvorrichtung kann grundsätzlich mit einer Beleuchtungsanordnung oder mit mehreren Beleuchtungsanordnungen mit verschiedenen Beleuchtungswinkeln ausgestattet sein. Ebenso kann die Messvorrichtung mit einer Aufpickanordnung oder mit mehreren Aufpickanordnungen mit unterschiedlichen Aufpickwinkeln ausgestattet sein. Die Beleuchtungs- und Aufpickanordnungen können in einer Ebene (in-plane) mit der Gerätennormalen oder in verschiedenen Ebenen (out-ofplane) positioniert sein. Grundsätzlich ist es auch möglich, Beleuchtungsanordnungen ohne Beleuchtungsoptik und/oder Aufpickanordnungen ohne Aufpickoptik zu realisieren.

Unabhängig von den konkreten Ausbildungsformen der erfindungsgemässen Messvorrichtung erzeugt der Bildsensor des Aufpicksystems für jeden Farbkanal einen Satz von spatial aufgelösten Messsignalen, deren Gesamtheit im Folgenden als (digitale) multi-spektrale Bilddaten bezeichnet sind. Die multi-spektralen Bilddaten sind also entsprechend der Pixel-Struktur des Bildsensors spatial und entsprechend den Farbkanälen der Messanordnung nach Wellenlängenbereichen bzw. spektral aufgelöst.

Damit die multi-spektralen Messdaten von jedem Pixel, welches im Bild eines Sparkle liegt, korrekt ist und für die spektrale Auswertung verwendet werden kann, müssen das optische System und die Datenaufbereitung spezielle Anforderungen erfüllen, welche im Folgenden beschrieben werden.

Die (digitale) Abbildung bzw. gemessene spatiale Signalverteilung des Abbilds einer Punktlichtquelle ergibt grundsätzlich eine glockenkurvenartige Intensitätsverteilung. Dieses Verhalten ist unter der Bezeichnung Punktverbreiterung bekannt. Die sog. Punktverbreiterungsfunktion (Point Spread Function, nachstehend kurz PSF) ist in der Literatur beschrieben. Die Ausprägung der PSF hängt vom optischen Abbildungssystem ab. Die sog. Airy-Funktion ist eine geschlossene Form der Punktverbreiterungsfunktion erzeugt durch ein beugungsbegrenztes Objektiv mit einer kreisförmigen Aperturbegrenzung.

Eine Eigenheit bei der Abbildung von Punktlichtquellen mittels eines optischen Systems besteht darin, dass die PSF wellenlängenabhängig ist. Dies führt dazu, dass in der vorstehend beschriebenen Messvorrichtung die Punktverbreiterungsfunktionen für jeden Farbkanal unterschiedlich sind.

In Fig. 9 sind drei typische PSF (Schnitt in einer spatialen Dimension) für drei verschiedene Wellenlängen 450 nm, 550 nm und 650 nm dargestellt. Die Abszisse gibt den radialen Abstand von der Punktmitte an, die Ordinate die zugehörigen normierten Intensitätswerte. Die Normierung bezieht sich auf die integrale Intensität / Energie in zwei Dimensionen.

Die Grösse von Flakes kann kleiner als die Auflösungsgrenze des Objektivs im Objektraum sein. In diesem Fall verhalten sich die erzeugten Sparklepunkte im Bild ähnlich wie Punktlichtquellen. Die räumliche Intensitätsverteilung des Sparklebildes kann in diesem Fall durch die optische PSF des Abbildungssystems beschrieben werden. Gemäss Fig. 9 hat dann das Abbild eines Sparkles einen stärkeren Peak im Zentrum für die Farbkanäle mit kürzeren Wellenlängen. Dieses Verhalten wird durch die kleinere räumliche Ausdehnung der PSF für die kürzeren Wellenlängenbereiche verursacht. Das führt dazu, dass bei einer Rekombination der Bilder ("Farbauszüge") aller Farbkanäle in ein zusammengesetztes Bilddaten-Array die Verteilung der Pixel-Werte innerhalb eines Sparkles inhomogen ist. Im Falle eines RGB-Bilderfassungssystems würden weisse Sparkles einen blauen Spot hoher Intensität im Zentrum und einen roten Ring geringerer Intensität an der Peripherie des Sparkle-Bilds zeigen. Diese "spektrale" Inhomogenität über die Pixel, welche den Bereich des detektierten Sparkles abdecken, erschwert die Bildanalyse mit multi-spektralen Bilddaten. Auch erzeugt die Darstellung solcher multi-spektraler Bilddaten auf einem digitalen Display (z.B. Monitor) eine digitale Repräsentation der Sparkles, welche nicht dem entspricht, wie ein menschlicher Beobachter die spektralen Eigenschaften der Sparkles wahrnehmen würde.

Aufgrund dieser Problematik besteht die Notwendigkeit einer verbesserten Repräsentation multi-spektraler Bilddaten für charakteristische Sparkle-Eigenschaften, welche durch das Material und nicht durch die eingesetzte Messtechnologie bestimmt ist.

Gemäss der Erfindung ist der Rechner P dazu ausgebildet, auf dem Wege der Bilddatenverarbeitung eine Optimierung bzw. Korrektur der Punktverbreiterungsfunktionen der Aufpickanordnung bzw. deren Optik in dem
Sinne vorzunehmen, dass für jeden Bildpunkt und insbesondere für jeden Farbkanal (Spektral- bzw. Wellenlängenbereich) dieselbe (optimierte) Punktverbreiterungsfunktion PSF gilt, d.h. dass die (optimierte) PSF für jeden Farbkanal dieselbe Form aufweist, wobei die optimierten bzw. korrigierten PSF nicht geräte- oder technologieabhängig sind. Als Ergebnis dieser Massnahme weist jedes Pixel (jeder Bildpunkt) innerhalb eines detektierten Sparkles korrekte spektrale Eigenschaften auf und ausserdem haben die Bilddaten jedes Farbkanals dieselbe spatiale Auflösung. Die Optimierung bzw. Korrektur der PSF sowie die Verarbeitung der multi-spektralen Bilddaten anhand der korrigierten PSF ist weiter unten erläutert.

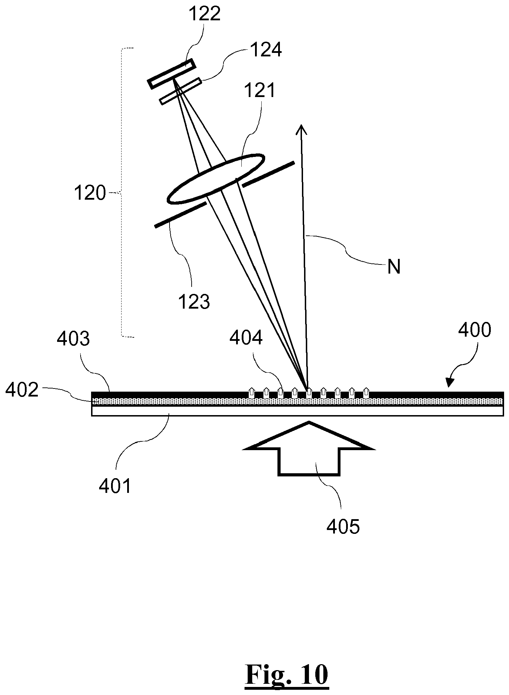

Die Form der PSF für jeden Farbkanal der Messanordnung kann direkt mit einer speziellen Anordnung gemessen werden. Die Fig. 10 zeigt schematisch, wie dies mit Hilfe einer PSF-Charakterisierungsmaske erfolgen kann.

Die Messvorrichtung ist dazu auf einer ebenen PSF-Charakterisierungsmaske 400 platziert, welche ein transparentes Substrat 401, eine diffus streuende Zwischenschicht 402 und eine Lochmaskenschicht 403 mit einer Vielzahl von feinen Löchern 404 aufweist. Die Lochmaskenschicht kann z.B. eine lithographisch erzeugte Chrom-Maske sein. Die Zwischenschicht kann auch fehlen und durch eine diffuse Hintergrundbeleuchtung ersetzt sein. Die Grösse der Löcher 404 ist kleiner als oder in der gleichen Grössenordnung wie die Auflösung der optischen PSF der Aufpickanordnung 120 bzw. deren Aufpickoptik 121 in der Messfeldebene.

Die PSF-Charakterisierungsmaske 400 ist von unten beleuchtet (Lichtquelle 405), so dass die feinen Löcher 404 gewissermassen als Punktlichtquellen wirken. Die PSF-Charakterisierungsmaske 400 ist senkrecht zur Gerätenormalen N ausgerichtet. Von der Messvorrichtung selbst ist nur die Aufpickanordnung 120 entsprechend Fig. 1 dargestellt. Die Beleuchtungsanordnung 110 (Fig. 1) ist für die Messung der PSF nicht aktiviert, die Lichtquelle 405 sollte ähnliche spektrale Eigenschaften wie diejenigen der internen Beleuchtungsanordnung 110 aufweisen. Alternativ kann die Lochmaskenschicht auch auf einem diffus reflektierenden Substrat angeordnet sein, wobei die Beleuchtung dann im Auflicht direkt durch die Beleuchtungsanordnung 110 erfolgt.

Der Bildsensor 122 empfängt über die Aufpickoptik 121 und die Farbfilter 124 von den Punktlichtquellen 404 der PSF-Charakterisierungsmaske 400 abgestrahltes Licht für jeden durch die Farbfilter 124 definierten Farbkanal. Die entsprechenden multi-spektralen Bilddaten stellen unmittelbar das Ergebnis aus der Faltung des spatialen Lochs mit der Punktverbreiterungsfunktionen PSF der Aufpickanordnung 120 bzw. deren Aufpickoptik 121 für jeden Farbkanal dar. Es ist zu bemerken, dass die PSF auch spatial variieren, d.h. dass für jeden Ort des ausgemessenen Bilds eine eigene PSF gilt. Die Optimierung bzw. Korrektur der PSF erfolgt daher für jeden Ort (Bildpunkt), wobei vorwegnehmend schon erwähnt sei, dass dies aus praktischen Gründen exakt nur für ein gröberes Raster von Bildpunkten erfolgt und für alle Zwischenpunkte eine Annäherung durch Interpolation vorgenommen wird. Als Raster können dabei direkt die PSF-Charakterisierungsmaske 400 bzw. deren einzelne Löcher 404 dienen.

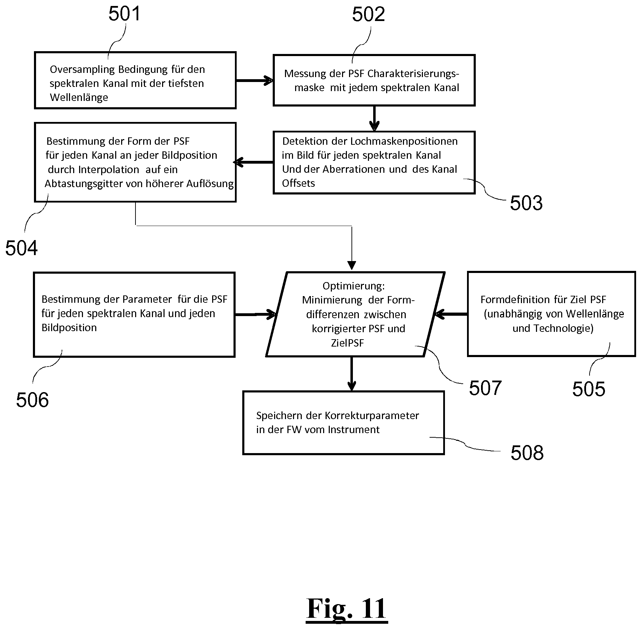

In Fig. 11 ist anhand einer blockschematischen Darstellung erläutert, wie zur Optimierung, d.h. zur Erreichung einer bestimmten einheitlichen Form der PSF erforderliche Korrekturparameter gebildet werden.

Eine wichtige Voraussetzung ist, dass der Bildsensor eine genügend hohe spatiale Auflösung aufweist, um die gemessene PSF für jeden Farbkanal ausreichend genau abtasten zu können (over-sampling, Abtast-Kriterium). Weiter oben wurde anhand der Fig. 9 gezeigt, dass die Breite der PSF wellenlängenabhängig ist, wobei sich die geringste Breite für den Farbkanal mit dem Bereich kürzester Wellenlängen ergibt. Für diesen Farbkanal muss das Abtastkriterium erfüllt sein. Ein gutes Kriterium ist, dass die volle Breite der gemessenen PSF bei der Hälfte des Maximalwerts (FWHM) mindestens zweimal grösser ist als das Abtastintervall (Pixel-Abstand) des Bildsensors. In Fig. 11 ist dies durch den Block 501 symbolisiert.

Im durch den Block 502 symbolisierten nächsten Schritt wird für jeden Farbkanal ein Bild ("Farbauszug") der PSF-Charakterisierungsmaske 400 gemessen.

In Block 503 wird dann für jeden Farbkanal im Pixel-Array des Bildsensors 122 die Position der Punktlichtquellen 404 detektiert. Die Position einer Punktlichtquelle ist z.B. durch die Position des (Flächen-)Schwerpunkts der Signalverteilung der Pixel charakterisiert. Ferner werden für jeden Farbkanal optische Aberrationen gemessen und in der Firmware der Messvorrichtung gespeichert. Die gemessene bzw. so bestimmte Position der Punktlichtquellen im gemessenen Bild wird dann mit der (gegebenen und bekannten) Position der Punktlichtquellen 404 auf der PSF-Charakterisierungsmaske 400 verglichen. Die Positionsdifferenzen werden für jeden Farbkanal charakterisiert und durch eine Positionskorrekturfunktion beschrieben. Diese Positionskorrekturfunktion kann z.B. eine Tabelle mit den gemessenen Positionsdifferenzen über das ausgemessene Feld sein und als Eingangsinformation für einen Interpolationsprozess zur Bestimmung der korrekten Position von dazwischenliegenden Pixeln dienen. Die Anwendung dieser Positionskorrekturfunktion für jeden Farbkanal gewährleistet, dass die seitliche Position jedes multi-spektralen Bilds auf dieselbe Referenzposition zentriert wird. Im Besonderen ist dann die gemessene Schwerpunktsposition einer Sparkle Punktlichtquelle für jedes multi-spektrale Bild an derselben Stelle. Wenn sich die spektralen Detektoren des Bildsensors an unterschiedlichen Stellen befinden, wie z.B. bei einem Kamera Filter-Array, dann muss diese spatiale Abweichung (Offset) gemessen und wie vorstehend beschrieben korrigiert werden.

Im nächsten Schritt (Block 504) erfolgt zunächst ein Resampling der gemessenen Bilddaten in ein feineres Abtastraster, welches willkürlich bemessen ist und z.B. Punktabstände von 25 µm aufweist. Das Resampling erfolgt durch Interpolation z.B. in Form einer Faltung - siehe z.B. Kapitel 10.3.3 im Referenzdokument [Burger09]. Aufgrund der Positionskorrektur und des Resamplings können Abweichungen der Vergrösserung und des optischen Systems zwischen unterschiedlichen Messvorrichtungen korrigiert werden (chromatische Aberration), um vergleichbare geometrische Verhältnisse im Objektraum zu erhalten.

Dann wird für jeden Farbkanal und für jeden Ort (Positionen der gemessenen Lichtpunkte) die Form der PSF bestimmt. Die Anzahl der multi-spektralen Bilddaten-Werte jeder Punktlichtquelle wird für jeden Farbkanal durch numerische Interpolation zwischen den tatsächlich gemessenen Bilddaten-Werten (Pixel-Werte) erhöht. Dieses Over-Sampling trägt dazu bei, die exakte Form der gemessenen PSF genauer zu bestimmen. Die Form der PSF kann z.B. durch einen Satz von charakteristischen Daten beschrieben werden, z.B. durch die Breite der PSF bei drei verschiedenen Signal-Höhen, beispielsweise 80%, 50% und 10% des Maximalwerts.

Die Blöcke 505 - 507 veranschaulichen den Korrekturprozess der gemessenen PSF. Ziel dieses Korrekturprozesses ist es, alle gemessenen PSF so zu verändern, dass sie möglichst genau mit der Form einer vorgegebenen, geräte- und technologieunabhängigen Ziel-PSF übereinstimmen. Die Ziel-PSF (Block 505) ist so festgelegt, dass sie breiter als die breiteste gemessene PSF ist. Für ein hochwertiges Abbildungsobjektiv ist dies diejenige PSF, die im Farbkanal mit den grössten Wellenlängen gemessen wurde. Die Anpassung der PSF an eine einheitliche Ziel-PSF ermöglicht die Erzeugung von geräte- und technologieunabhängigen Bilddaten.

Die Korrektur der Form des PSF erfolgt für jeden Farbkanal (und jeden Ort) mittels einer Faltungs-Operation der gemessenen Bilddaten mit einer festgelegten, parametrisierten Filterfunktion (Block 506). Ein Beispiel einer Filterfunktion hat (in einer Dimension) eine dreieckige bzw. (in zwei Dimensionen) eine konische Form, wobei die Basisbreite des Dreiecks bzw. des Kegels den Parameter der Filterfunktion darstellt. Der oder die Parameter der Filterfunktion wird/werden in einem Optimierungsprozess (Block 507) dabei so bestimmt, dass die Form der korrigierten PSF am besten mit der Form der vorgegebenen Ziel-PSF übereinstimmt. Die Übereinstimmung kann anhand einer Ähnlichkeitsfunktion festgestellt werden. Eine (sehr einfache) Ähnlichkeitsfunktion bzw. ein einfaches Übereinstimmungskriterium können die Breiten der korrigierten PSF (im Vergleich zur Ziel-PSF) bei verschiedenen Signal-Höhen sein. Am Ende des Optimierungsprozesses liegt für jeden Farbkanal und jeden Ort ein Korrekturparameter bzw. ein Satz von Korrekturparametern vor, die dann in der Firmware der Messvorrichtung gespeichert werden (Block 508). Diese Korrekturparameter werden dann bei der Ausmessung von Sparkles für die Verarbeitung der dabei gemessenen multi-spektralen Bilddaten verwendet. Auf diese Weise können für jede Messung korrigierte Mess- bzw. Bilddaten erzeugt werden. Zusammenfassend gibt es zwei Arten von Korrekturen: Örtliche Korrekturen (chromatische Aberration, Resampling, Detektor-Offset) und Auflösungsanpassungen (gleiche äquivalente PSF).

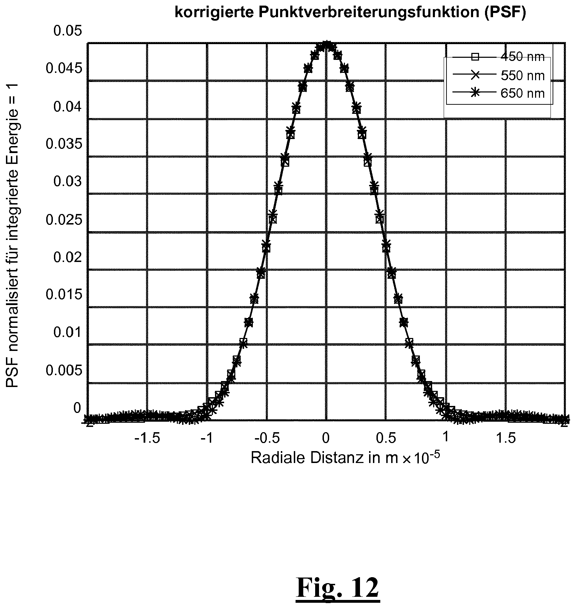

In Fig. 12 sind drei typische PSF (Schnitt in einer spatialen Dimension) für drei verschiedene Wellenlängen 450 nm, 550 nm und 650 nm dargestellt, welche durch den eben beschriebenen Optimierungsprozess erhalten werden. Die Abszisse gibt den radialen Abstand von der Punktmitte an, die Ordinate die zugehörigen, auf gleiche Energie normierten Intensitätswerte. Wie man erkennt, haben alle drei PSF (oberhalb des 10%-Werts) dieselbe Form bzw. denselben Verlauf.

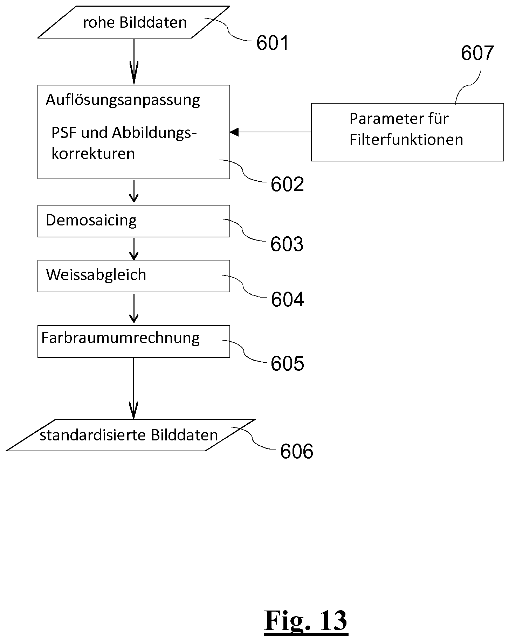

In Fig. 13 ist anhand einer blockschematischen Darstellung erläutert, wie die vom Bildsensor gemessenen multi-spektralen Bilddaten unter Einbezug der vorstehend erwähnten Korrektur der PSF, wie auch der örtlichen Korrektur, zu standardisierten Bilddaten verarbeitet werden. Abgesehen von der PSF-Korrektur entspricht die Verarbeitung der Bilddaten dabei dem im Dokument EP 2728342 B1 bzw. US 2014/0152990 A1 ausführlich beschriebenen Verarbeitungsprozess, so dass sich die folgende Beschreibung auf die wesentlichsten Punkte beschränken kann.

Die vom Bildsensor gemessenen, rohen multi-spektralen Bilddaten sind durch den Block 601 dargestellt. Die optische und spatiale Auflösung der rohen Bilddaten ist bildsensor-spezifisch. In Block 602 findet eine Auflösungsanpassung statt, wobei die optische und spatiale Auflösung der Bilddaten so angepasst werden, dass sie einer gewünschten Ausgabe-Auflösung entsprechen. In Block 602 werden ferner auch die erwähnten PSF- und Abbildungskorrekturen vorgenommen, worauf noch näher eingegangen wird. Anschliessend wird in Block 603 ein sog. Demosaicing durchgeführt, bei dem örtlich getrennte Farbpixel zu einem einzigen Farbpixel zusammengeführt werden. Dieser Schritt kann je nach Art des eingesetzten Bildsensors auch entfallen. Anschliessend erfolgt in Block 604 ein Weissabgleich der Bilddaten. Schliesslich erfolgt in Block 605 eine Umrechnung der multi-spektralen Bilddaten in einen Farbraum, z.B. in den CIE XYZ- oder sRGB-Farbraum . Als Ergebnis all dieser Verarbeitungsschritte liegen schliesslich standardisierte Bilddaten vor (Block 606). Die resultierenden Bilddaten sind geräteunabhängig und können als Basis zur Berechnung weiterer interessierender Daten, z.B. Textur-Daten herangezogen werden.

Die PSF-Korrekturen in Block 602 erfolgen anhand der in der Firmware der Messvorrichtung abgespeicherten Parameter für die Filterfunktion (Block 607). Alle Operationen erfolgen für die Bilddaten jedes Farbkanals separat.

Die vorstehend erläuterten Korrektur-Schritte (Faltung, Interpolation, Abbildungskorrekturen, Positionskorrekturen des Bildsensors) können sehr rechenintensiv sein und können daher vorzugsweise durch einen speziell dafür ausgebildeten bzw. programmierten Prozessor durchgeführt werden.

### Referenzen:

[Wissling2006] Wissling, P. (2006). Metallic Effect Pigments: Fundamentals and Applications. Vincentz Network GmbH & Co KG.
[Pfaff2008] Pfaff, G. (2008). Special effect pigments: technical basics and applications. Vincentz Network GmbH & Co KG.
[Kirchner 2007] Kirchner, E., van den Kieboom, G. J., Njo, L., Super, R., & Gottenbos, R. (2007). Observation of visual texture of metallic and pearlescent materials. Color Research & Application, 32(4), 256-266.
[Kirchner 2015] Kirchner, E., Van der Lans, I., Perales, E., Martinez-Verdü, F., Campos, J., & Ferrero, A. (2015). Visibility of sparkle in metallic paints. JOSA A, 32(5), 921-927.
[Burger09] Wilhelm Burger, Mark J. Burge (2009) Principles of Digital Image Processing: Core Algorithms

## Patentansprüche

1. Vorrichtung zur radiometrischen Ausmessung der Oberfläche eines Messobjekts mit in einem Trägermaterial eingebetteten Effektpigmenten oder Flakes,
mit mindestens einer eine Beleuchtungsanordnung (110; 210; 410) und eine Aufpickanordnung (120; 220) aufweisenden Messanordnung (100; 200; 300; 400) und
mit einem Rechner (P) zur Steuerung der Beleuchtungsanordnung (110; 210; 410) und der Aufpickanordnung (120; 220; 420) sowie zur Verarbeitung von von der Aufpickanordnung (120; 220; 420) erzeugten Messsignalen und zur Bereitstellung von verarbeiteten Bilddaten, wobei
die Beleuchtungsanordnung (110; 210; 410) mindestens eine Lichtquelle (111) aufweist und dazu ausgebildet ist, einen Bereich des Messobjekts (O) unter einem Beleuchtungswinkel (θᵢ) und einem Beleuchtungsaperturwinkel (αᵢ) mit Beleuchtungslicht zu beaufschlagen und wobei die Aufpickanordnung (120; 220; 420) einen fotoelektrischen Bildsensor (122) aufweist und dazu ausgebildet ist, vom Messobjekt (O) zurückgestrahltes Messlicht unter einem Aufpickwinkel (θᵥ) und einem Aufpickaperturwinkel (αᵥ) aufzufangen und auf den Bildsensor (122) zu lenken, und wobei
die Beleuchtungsanordnung (110; 210; 410) dazu ausgebildet ist, Beleuchtungslicht in mehreren Spektralbereichen zu erzeugen und/oder die Aufpickanordnung (120; 220; 420) dazu ausgebildet ist, aufgefangenes Messlicht in mehrere Spektralbereiche aufzuspalten, so dass der Bildsensor (122) multi-spektrale Bilddaten erzeugt, wobei
der Beleuchtungsaperturwinkel (αᵢ) der Beleuchtungsanordnung (110) und/oder der Aufpickaperturwinkel (αᵥ) der Aufpickanordnung (120) grösser als die durch die Materialdispersion des Trägermaterials verursachte Winkelvariation über den spektralen Messbereich des von einem im Trägermaterial eingebetteten Effektpigment bzw. Flake reflektierten Lichts ist bzw. sind,
wobei die Vorrichtung eine Firmware umfasst,
**dadurch gekennzeichnet, dass**
in der Firmware der Vorrichtung zu jedem Farbkanal der multi-spektralen Bilddaten ein Korrekturparameter oder ein Satz von Korrekturparametern zur Korrektur von Punktverbreiterungsfunktionen der Aufpickanordnung gespeichert ist, der von einer einheitlichen geräteunabhängigen Ziel-Punktverbreiterungsfunktion abgeleitet ist, wobei der Rechner (P) dazu ausgebildet ist, die multi-spektralen Bilddaten unter Verwendung der in der Firmware abgespeicherten Korrekturparameter zu verarbeiten.

## Claims

1. Device for radiometric measurement of a surface of a measurement object having effect pigments of flakes embedded in a carrier material,
having at least one measurement array (100; 200; 300; 400) having an illumination array (110; 210; 410) and an acquisition array (120; 220) and
having a computing device (P) for controlling the illumination array (110; 210; 410) and the acquisition array (120; 220; 420) as well as for processing the measurement signals generated by the acquisition array (120; 220; 420) and for providing the processed image data, wherein
the illumination array (110; 210; 410) has at least one light source (111) and is configured to direct illumination light onto a region of the measurement object (O) at an illumination angle (θᵢ) and an illumination aperture angle (αᵢ) and wherein the acquisition array (120; 220; 420) has a photoelectric image sensor (122) and is configured to detect measurement light reflected from the measurement object (O) at an acquisition angle (θᵥ) and an acquisition aperture angle (αᵥ) and to direct it onto the image sensor (122), and wherein
the illumination array (110; 210; 410) is configured to generate illumination light in a plurality of spectral regions and/or the acquisition array (120; 220; 420) is configured to divide the detected measurement light into a plurality of spectral regions so that the image sensor (122) generates multi-spectral image data, wherein
the illumination aperture angle (αᵢ) of the illumination array (110) and/or the acquisition aperture angle (αᵥ) of the acquisition array (120) is or are, respectively, larger than the angular variation over the spectral measurement region of the light reflected from an effect pigment or flake, respectively, embedded in the carrier material caused by the material dispersion of the carrier material,
wherein the device includes firmware,
**characterized in that**
a correction parameter or a set of correction parameters for correction of point spread functions of the acquisition array is stored in the firmware of the device, wherein the correction parameter or the set of correction parameters is derived from a homogeneous device-independent target-point spread function, wherein the computing device (P) is configured to process the multi-spectral image data using the correction parameters stored in the firmware.

## Revendications

1. Dispositif de mesure radiométrique de la surface d'un objet à mesurer possédant des pigments à effets ou paillettes incorporés dans un substrat, le dispositif de mesure comprenant :
au moins une unité de mesure (100 ; 200 ; 300 ; 400) présentant un dispositif d'éclairage (110 ; 210 ; 410) et un dispositif de détection (120 ; 220), et
un ordinateur (P) destiné à commander le dispositif d'éclairage (110; 210 ; 410) et le dispositif de détection (120 ; 220 ; 420) ainsi qu'à traiter les signaux de mesure produits par le dispositif de détection (120 ; 220 ; 420) et à fournir des données images traitées ;
ledit dispositif d'éclairage (110; 210 ; 410) présentant au moins une source de lumière (111) et étant conçu pour exposer une zone de l'objet à mesurer (O) à de la lumière d'éclairage selon un angle d'éclairage (θᵢ) et un angle d'ouverture d'éclairage (αᵢ), et ledit dispositif de détection (120 ; 220 ; 420) présentant un capteur d'image photoélectrique (122) et étant conçu pour capter la lumière de mesure, réfléchie par l'objet à mesurer (O), selon un angle de détection (θᵥ) et un angle d'ouverture de détection (αᵥ), et pour la diriger vers ledit capteur d'image (122),
ledit dispositif d'éclairage (110; 210; 410) étant conçu pour produire de la lumière d'éclairage dans plusieurs domaines spectraux et/ou ledit dispositif de détection (120 ; 220 ; 420) étant conçu pour diviser la lumière de mesure captée en plusieurs domaines spectraux de façon que le capteur d'image (122) produise des données images multispectrales, et
ledit angle d'ouverture d'éclairage (αᵢ) du dispositif d'éclairage (110) et/ou l'angle d'ouverture de détection (αᵥ) du dispositif de détection (120) sont supérieurs à la variation angulaire, causée par la dispersion due au substrat, sur le domaine de mesure spectral de la lumière réfléchie par un pigment à effets ou paillette incorporé dans le substrat ;
ledit dispositif de mesure comprenant un micrologiciel ;
**caractérisé en ce que**
un paramètre de correction ou un ensemble de paramètres de correction visant à corriger des fonctions d'étalement du point du dispositif de détection et dérivé d'une fonction d'étalement du point cible unitaire indépendante de l'appareil est enregistré dans le micro logiciel du dispositif de mesure relativement à chaque canal de couleur des données images multispectrales, ledit ordinateur (P) étant conçu pour traiter les données images multispectrales au moyen des paramètres de correction stockés dans le micrologiciel.
